# EUROPEAN PATENT SPECIFICATION

(11) **EP 2 445 762 B1**
(45) Date of publication and mention of the grant of the patent: **19.11.2014**
(21) Application number: 10791586.0
(22) Date of filing: 25.06.2010
(51) Int. Cl.: B60R 21/26

(54) **HYBRID GAS GENERATOR**
WASSERSTOFFGASGENERATOREN
GÉNÉRATEUR DE GAZ HYBRIDE

(30) Priority: 26.06.2009 CN 200920133399 U
(43) Date of publication of application: 02.05.2012
(73) Proprietor: BYD Company Limited, Shenzhen 518118 (CN)
(72) Inventor: WANG, Dong, Guangdong 518118 (CN); HE, Jianmei, Guangdong 518118 (CN); LI, Junjie, Guangdong 518118 (CN)
(74) Representative: Gulde & Partner
(86) International application number: PCT/CN2010/074521
(87) International publication number: WO 2010/149080

(56) References cited:
- EP-A1- 1 323 595
- CN-U- 201 506 324
- CN-Y- 2 772 902
- CN-Y- 201 169 242
- DE-A1- 19 638 838
- GB-A- 2 322 436
- US-A1- 2007 200 325
- US-A1- 2009 045 612
- US-B1- 6 273 462

## Description

The present disclosure relates to a hybrid gas generator, more particularly to a hybrid gas generator for an automobile airbag.

### BACKGROUND

With fast development of automobile industry, people pay more attention to automobile safety issue, and people also pay more attention to the airbag which plays a key role in automobile safety performance. To improve the whole safety performance of the automobile, the performance requirement of the airbag is rising accordingly, and the performance requirement of the gas generator, which is a key component of the airbag, becomes stricter. A gas generator according to the preamble of claim 1 is disclosed in GB 2 322 436 A.

Currently, there are three types of gas generators, i.e., a pyrotechnic type, a high pressure gas cylinder type and a hybrid type. The pyrotechnic gas generator is widely used, but it has its own disadvantage. For example, the gas production is not stable, the residues may pollute environment. Although the high pressure type gas cylinder gas generator has no residue pollution problem, the gas production speed is difficult to control. The hybrid gas generator combines both the advantages of the pyrotechnic gas generator and the high pressure gas cylinder gas generator, such as a hybrid gas generator of the airbag which is used in an automobile for side impact protection, which is, for example, disclosed in a Chinese Patent with a serial number: CN2772902. As disclosed in this patent, the gas generator may comprise a high pressure gas cylinder and a gas producing device. The high pressure gas cylinder has an end connected with the gas producing device. The gas producing device may comprise a pyrotechnic gas cylinder with two open ends, a powder producing chamber is provided inside the pyrotechnic gas cylinder. The powder producing chamber has an end provided with an electric igniter and the other end provided formed with a conical neck. The pyrotechnic gas cylinder has an open exhaust hole. And an arch-shaped bursting disc is provided at an end of the pyrotechnic gas cylinder. The conical neck of the powder producing chamber may regulate the gas releasing direction of the gas in the powder producing chamber, which is helpful to break the bursting disc. Because the conical neck may occupy space, the exhaust space is relatively small, and the gas can not be exhausted from the exhaust hole, which may affect a deploying speed of the airbag.

### SUMMARY

In viewing thereof, the present invention is directed to solve at least one of the problems existing in the prior art. Accordingly, a hybrid gas generator may need to be provided, which may overcome gas discharging difficulties in the art, i.e., to break the bursting disc therein quickly and exhaust gas more smoothly.

A hybrid gas generator according to claim 1 and a vehicle according to claim 9 are provided, the hybrid gas generator comprising: a high pressure gas cylinder filled with high pressure gas which is formed with a discharging port at an open end thereof; a gas release actuating device comprising: a pyrotechnic gas cylinder with an open end hermetically connected with the discharging port; and an igniting assembly being provided at the other open end of the pyrotechnic gas cylinder for receiving signal to be trigged to Ignite; a bursting disc disposed in the discharging port to prevent the gas from being discharged. The pyrotechnic gas cylinder further comprises: a guide ring having a cylindrical shape; and a piercing plug fitted with the guide ring which faces toward the bursting disc to fly out of the guide ring for breaking the bursting disc when an inner pressure in the firing chamber exceeds a predetermined threshold, wherein the gas releasing chamber is formed with at least a vent for releasing the gas stored in the high pressure gas cylinder, and the firing chamber is filled with gas producing medium to produce gas for driving the piercing plug when the igniting assembly is Ignited. The guide ring is securely provided in the pyrotechnic gas cylinder and fixedly mated with an inside wall of the firing chamber to hermetically separate the space therein into a gas releasing chamber and the firing chamber.

According to the present invention, due to the fitting of the guide ring with the piercing plug to break the bursting disc under emergency rather than by the conical neck, additional space may be saved. In addition, after quick rupture of the bursting disc by the piercing plug, the gas produced therein may be exhausted or discharged more smoothly so that the airbag may be deployed rapidly.

### BRIEF DESCRIPTION OF THE DRAWINGS

These and other aspects and advantages of the invention will become apparent and more readily appreciated from the following descriptions taken in conjunction with the drawings in which:

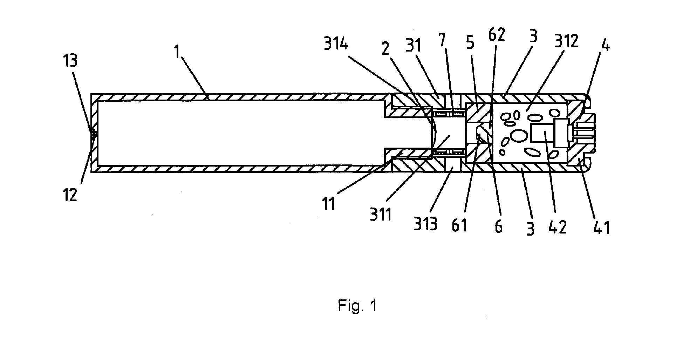

Figure 1 is a cross sectional view of a hybrid gas generator according to an embodiment of the present disclosure.

### DETAILED DESCRIPTION OF THE EMBODIMENTS OF THE DISCLOSURE

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

According to an embodiment of the invention, a hybrid gas generator may be provided. The hybrid gas generator may comprise a high pressure gas cylinder 1 filled with high pressure gas which is formed with a discharging port 11 at an open end thereof; a gas release actuating device comprising: a pyrotechnic gas cylinder 3 with an open end hermetically connected with the discharging port 11; and an igniting assembly 4 being provided at the other open end of the pyrotechnic gas cylinder 3 for receiving signal to be trigged to ignite; and a bursting disc 2 disposed in the discharging port 11 to prevent the gas from being discharged. The pyrotechnic gas cylinder 3 may further comprise: a guide ring 5 securely provided in the pyrotechnic gas cylinder 3 to hermetically separate the space therein into a gas releasing chamber 311 and a firing chamber 312; a piercing plug 6 fitted with the guide ring 5 which may face toward the bursting disc 2 to fly out of the guide ring for breaking the bursting disc 2 when an inner pressure in the firing chamber 312 may exceed a predetermined threshold. The gas releasing chamber 311 may be formed with at least a vent 313 for releasing the gas stored in the high pressure gas cylinder 1, and the firing chamber 312 may be filled with gas producing medium to produce gas for driving the piercing plug 6 when the igniting assembly 4 may be ignited.

In the following, the hybrid gas generator will be described in detail with reference to accompanying Fig. 1.

As shown in Fig. 1, the hybrid gas generator may comprise a high pressure gas cylinder 1 and a gas release actuating device which is connected with the high pressure gas cylinder 1. The discharging port 11 may be formed at an open end of the high pressure gas cylinder 1. The bursting disc 2 may be fixedly provided in the discharging port 11. The gas release actuating device may have two open ends. The pyrotechnic gas cylinder 3 may comprise a firing chamber 312 and an gas releasing chamber 311 which may be separately formed by an external shell 31 of the pyrotechnic gas cylinder 3, the gas releasing chamber 311 may be, for example, threadedly, connected with the discharging port 11 and one end of the firing chamber 312; the other end of the firing chamber 312 may be connected with the igniting assembly 4. At least a vent 313 may be formed on the external shell of the gas releasing chamber 311. Further, the guide ring 5 may be provided in the firing chamber 312 close to the gas releasing chamber 311, and the piercing plug 6 facing toward the bursting disc 2 may be fitted in the guide ring 5.When the pressure inside the firing chamber 312 exceeds a predetermined threshold, such as a fitting strength of the guide ring 5 with the piercing plug 6, the piercing plug 6 flies out of the guide ring 5 along the central axis of the guide ring 5 toward the bursting disc and break the bursting disc 2 accordingly.

According to an embodiment of the present invention, the bursting disc 2 may have a convexed disc shape or arched disc shape with a convex side facing toward the gas releasing chamber 311. Alternatively, and the bursting disc 2 may be welded in the discharging port 11. The strength of the bursting disc 2 may be predetermined as conditions may require, to ensure timely rupture of the bursting disc 2 by the piercing plug 6 under emergencies. In addition, the strength thereof has to be ensured to decrease the kinetic energy of the bursting disc 2 rapidly after being impacted by the piercing plug 6 so that the high pressure gas cylinder 1 may not be damaged. According to an embodiment of the invention, a convexed bursting disc is preferable because the convexed bursting disc may be immediately broken after being impacted. The high pressure gas cylinder 1 may have a gas charging port 12 and a charging port cover 13 on an end opposite to the discharging port 11. High pressure gas may be pre-charged into the high pressure gas cylinder 1 after opening the charging port cover 13. Generally, for safety consideration, the high pressure gas may be inert gas with high pressure which may be determined based on actual conditions. According to an embodiment of the invention, the high pressure gas cylinder 1 may be threadedly connected with the pyrotechnic gas cylinder 3. To be specific, the discharging port 11 of the high pressure gas cylinder 1 may be formed with an external thread, and the pyrotechnic gas cylinder 3 may be formed with an installation port 314 adapted to the discharging port 11. And the installation port 314 may be formed with an internal thread to be engaged with the external thread of the discharging port 11. The high pressure gas cylinder 1 may be securely connected with the pyrotechnic gas cylinder 3 via the fitting of the external thread and the internal thread.

According to an embodiment of the invention, a filtering screen 7 may be provided in the gas releasing chamber 311. And gas through the discharging port 313 may be filtered by the filtering screen 7 accordingly. The filtering screen 7 may filter the fragment of the bursting disc 2 and the residues generated from gas producing medium stored in the firing chamber 312. As shown in Fig. 1, according to an embodiment of the invention, there may be two discharging ports 313 which may be symmetrically formed on the shell 31.

The igniting assembly 4 may comprise an end cover 41 hermetically connected with the firing chamber 312, and an igniting tube 42 filled with ignition powder which may be projected inside the firing chamber 312. The ignition powder may be filled in the igniting tube 42. A triggering signal, such as a sharp braking etc., may be transmitted to the igniting assembly 4 to ignite the ignition powder in the ignition tube 42 immediately so that the external shell of the igniting tube 42 may be pushed open to ignite the firing powder filled in the firing chamber 312. The fitting strength of the igniting assembly 4 and the firing chamber 312 may be stronger than that of the piercing plug 6 with the guide ring 5. Thus, the piercing plug 6 may be pushed by the gas in the firing chamber 312 to break the bursting disc 2 before the igniting assembly 4 is separated from the firing chamber 4. Thus, it is ensured that the piercing plug 6 normally flies out of the plug 6 from the guide ring 5 accordingly.

According to an embodiment of the invention, the guide ring 5 may have a cylindrical shape formed with an inner cylindrical hole. The piercing plug 6 may comprise a wedged portion 61 and a cylindrical portion 62 connected with the wedged portion 61. The wedged portion 61 may face toward the bursting disc 2, and the external surface of the cylindrical portion 62 may be tightly or hermetically mated or fitted with the inner cylindrical hole with a predetermined fitting strength. The guide ring 5 may be fixedly mated with the inside wall of the firing chamber 312, thus forming a sealed space in the firing chamber 312 with the ignition powder being filled therein. The fitting strength of the cylindrical portion 62 with the guide ring 5 may be smaller than that of the igniting assembly 4 with the firing chamber 312 to ensure that the plug 6 may fly out of the inner cylindrical hole of the guide ring 5 normally.

It should be noted that the hybrid gas generator may be applied in an area such as automobile, track etc for triggering the airbag equipped thereon.

In the following, the operation of the present invention will be described in detail with reference to accompanying Fig. 1.

When a vehicle may enter into an emergent situation and airbags equipped thereon are about to be deployed, the igniting assembly 4 of the hybrid gas generator may respond in a very short time after receiving the signal to rapidly ignite the ignition powder of the igniting assembly 4. The burning ignition powder will ignite gas producing medium, such as gas production powder stored in the firing chamber 312 in a very rapid speed. Because the firing chamber 312 may be a sealed space formed by the shell of the pyrotechnic powder cylinder 3, the guide ring 5, the plug 6 and the igniting assembly 4, once the gas production powder burned therein, a large amount of gas with high pressure may be produced immediately to trigger rapid pressure arising inside the firing chamber 312. At the meantime, because the fitting strength of the igniting assembly 4 and the firing chamber 312 may be greater than that of the plug 6 with the guide ring 5, when the pressure inside the firing chamber 312 may reach the predetermined value, the plug 6 fitted in the guide ring 5 will straightly fly out of the guide ring 5 along the axis thereof. Because the plug 6 may face toward the bursting disc 2, the flying-out plug 6 will impact directly to the bursting disc 2 inside the discharging port 11 of the high pressure gas cylinder 1. The strength of the bursting disc 2 may be predetermined as conditions may require, to ensure timely rupture of the bursting disc 2 by the piercing plug 6 under emergencies. In addition, the strength thereof has to be ensured to decrease the kinetic energy of the bursting disc 2 rapidly after being impacted by the piercing plug 6 so that the high pressure gas cylinder 1 may not be damaged. The plug 6 after impacting will be dropped inside the high pressure gas cylinder 1. Due to the break or rupture of the bursting disc 2, the inert gas with high pressure stored in the high pressure gas cylinder 1 may be discharged from the discharging port 11, and may be mixed with the gas produced from the firing chamber 312. And the mixed gas may be filtered by the filtering screen 7 and may be further discharged out of the hybrid gas generator from the discharging hole 313. And then the airbag may be deployed rapidly.

According to the present invention, the triggering mode of the high pressure gas cylinder is improved or enhanced, discarding the triggering mode of the gas generator by powder ignition. In the present invention, the gas generator is triggered by a simple mechanical design of a piercing plug with a guide ring which ensure the triggering of the high pressure gas cylinder 1 and the rupture of the bursting disc. In addition, the firing chamber in the hybrid gas generator according to an embodiment of the present invention may be hermetically sealed, and the power stored in the firing chamber may function to a maximum extent. Further, because discharging hole formed in the gas releasing chamber is totally free from any hindrance or blockage, the discharging of the gas from the gas releasing chamber becomes smoother.

## Claims

1. A hybrid gas generator, comprising:
a high pressure gas cylinder (1) filled with high pressure gas which is formed with a discharging port (11) at an open end thereof;
a gas release actuating device comprising:
a pyrotechnic gas cylinder (3) with an open end hermetically connected with the discharging port (11); and
an igniting assembly (4) being provided at the other open end of the pyrotechnic gas cylinder (3) for receiving signal to be trigged to ignite;
a bursting disc (2) disposed in the discharging port (11) to prevent the gas from being discharged; wherein
the pyrotechnic gas cylinder (3) further comprises:
a guide ring (5) having a cylindrical shape; and
a piercing plug (6) fitted with the guide ring (5) which faces toward the bursting disc (2) to fly out of the guide ring (5) for breaking the bursting disc (2) when an inner pressure in the firing chamber (312) exceeds a predetermined threshold, wherein
the gas releasing chamber (311) is formed with at least a vent (313) for releasing the gas stored in the high pressure gas cylinder (1), and the firing chamber (312) is filled with gas producing medium to produce gas for driving the piercing plug (6) when the igniting assembly (4) is ignited,
**characterized in that**
the guide ring (5) is securely provided in the pyrotechnic gas cylinder (3) and is fixedly mated with an inside wall of the firing chamber (312) to hermetically separate the space therein into a gas releasing chamber (311) and the firing chamber (312).

2. The hybrid gas generator according to claim 1, further comprising a filtering screen (7) provided inside the gas releasing chamber (311) to cover the vent (313).

3. The hybrid gas generator according to claim 1, wherein the igniting assembly (4) comprises:
an end cover (41) hermetically connected with the firing chamber (312); and
an igniting tube (42) filled with ignition powder which is projected inside the firing chamber (312).

4. The hybrid gas generator according to claim 3, wherein the guide ring (5) has an inner cylindrical hole, and the piecing plug (6) has a wedged portion (61) and a cylindrical portion (62) connected with the wedged portion (61) with the wedged portion (61) facing toward the bursting disc (2), and the guide ring (5) and the mated piecing plug (6) are secured in the firing chamber (312) to form a hermetic space.

5. The hybrid gas generator according to claim 1, wherein the bursting disc (2) has a convexed disc shape with a convex side facing toward the gas releasing chamber (311), and the bursting disc (2) is welded in the discharging port (11).

6. The hybrid gas generator according to claim 4, wherein the igniting assembly (4) has a fitting strength with the pyrotechnic gas cylinder (3) larger than that of the piercing plug (6) with the guide ring (5).

7. The hybrid gas generator according to claim 1, wherein the pyrotechnic gas cylinder (3) is threadedly connected with the discharging port (11).

8. The hybrid gas generator according to claim 1, wherein the strength of the bursting disc (2) is configured to be broken by the piercing plug (6) and further configured to prevent from breaking the high pressure gas cylinder (1) after being impacted by the piercing plug (6).

9. A vehicle comprising the hybrid gas generator according to claim 1.

## Patentansprüche

1. Ein Hybridgasgenerator, aufweisend:
einen mit Hochdruckgas gefüllten Hochdruck-Gaszylinder (1), welcher mit einer Ablassöffnung (11) an einem offenen Ende desselben ausgebildet ist;
eine Gasfreisetzungs-Betätigungsvorrichtung, aufweisend:
einen pyrotechnischen Gaszylinder (3) mit einem offenen Ende, das hermetisch mit der Ablassöffnung (11) verbunden ist; und
eine Zündanordnung (4) zum Empfangen eines Signals, um zum Zünden ausgelöst zu werden, die an dem anderen offenen Ende des pyrotechnischen Gaszylinders (3) vorgesehen ist;
eine Berstscheibe (2), die in der Ablassöffnung (11) angeordnet ist, um zu verhindern, dass das Gas abgelassen wird; wobei
der pyrotechnische Gaszylinder (3) ferner aufweist:
einen Führungsring (5) mit einer zylindrischen Form; und
einen in den Führungsring (5) eingesetzten Durchstechstopfen (6), welcher der Berstscheibe (2) zugewandt ist, um zum Durchbrechen der Berstscheibe (2) aus dem Führungsring (5) herauszufliegen, wenn ein Innendruck in der Schießkammer (312) einen vorbestimmten Schwellenwert überschreitet, wobei die Gasfreisetzungskammer (311) mit mindestens einer Lüftungsöffnung (313) zum Freisetzen des in dem Hochdruck-Gaszylinder (1) gespeicherten Gases ausgebildet ist und die Schießkammer (312) mit gaserzeugendem Medium gefüllt ist, um Gas zum Antreiben des Durchstechstopfens (6) zu erzeugen, wenn die Zündanordnung (4) gezündet wird,
**dadurch gekennzeichnet, dass**
der Führungsring (5) in dem pyrotechnischen Gaszylinder (3) befestigt angebracht ist und fest mit einer Innenwand der Schießkammer (312) zusammengepasst ist, um den Raum darin hermetisch in eine Gasfreisetzungskammer (311) und die Schießkammer (312) zu trennen.

2. Der Hybridgasgenerator nach Anspruch 1, welcher ferner ein innerhalb der Gasfreisetzungskammer (311) vorgesehenes Filtersieb (7) zum Abdecken der Lüftungsöffnung (313) aufweist.

3. Der Hybridgasgenerator nach Anspruch 1, wobei die Zündanordnung (4) aufweist:
eine Endabdeckung (41), die mit der Schießkammer (312) hermetisch verbunden ist; und
ein Zündrohr (42), das mit einem Zündpulver gefüllt ist, welches in die Schießkammer (312) hineingeschleudert wird.

4. Der Hybridgasgenerator nach Anspruch 3, wobei der Führungsring (5) eine zylindrische Innenöffnung aufweist und der Durchstechstopfen (6) einen keilförmigen Abschnitt (61) und einen mit dem keilförmigen Abschnitt (61) verbundenen zylindrischen Abschnitt (62) aufweist, wobei der keilförmige Abschnitt (61) der Berstscheibe (2) zugewandt ist und der Führungsring (5) und der mit diesem zusammengepasste Durchstechstopfen (6) so in der Schießkammer (312) befestigt sind, um einen hermetischen Raum zu bilden.

5. Der Hybridgasgenerator nach Anspruch 1, wobei die Berstscheibe (2) eine konvexe Scheibenform mit einer der Gasfreisetzungskammer (311) zugewandten konvexen Seite aufweist und die Berstscheibe (2) in dem Auslasskanal (11) verschweißt ist.

6. Der Hybridgasgenerator nach Anspruch 4, wobei die Zündanordnung (4) mit dem pyrotechnischen Gaszylinder (3) eine Passfestigkeit aufweist, die größer als diejenige des Durchstechstopfens (6) mit dem Führungsring (5) ist.

7. Der Hybridgasgenerator nach Anspruch 1, wobei der pyrotechnische Gaszylinder (3) mit dem Auslasskanal (11) schraubverbunden ist.

8. Der Hybridgasgenerator nach Anspruch 1, wobei die Festigkeit der Berstscheibe (2) so bemessen ist, dass sie von dem Durchstechstopfen (6) durchbrochen wird, und ferner so bemessen ist, dass verhindert wird, dass sie den Hochdruck-Gaszylinder (1) durchbricht, nachdem der Durchstechstopfen (6) auf sie eingewirkt hat.

9. Ein Fahrzeug, welches den Hybridgasgenerator nach Anspruch 1 aufweist.

## Revendications

1. Générateur de gaz hybride comprenant:
un cylindre à gaz à haute pression (1) rempli de gaz à haute pression qui est formé avec un orifice de décharge (11) à une extrémité ouverte de celui-ci,
un dispositif d'actionnement de dégagement de gaz comprenant:
un cylindre à gaz pyrotechnique (3) avec une extrémité ouverte hermétiquement raccordée à l'orifice de décharge (11), et
un ensemble d'allumage (4) étant pourvu à l'autre extrémité ouverte du cylindre de gaz pyrotechnique (3) pour recevoir un signal à déclencher pour lancer,
un disque de rupture (2) disposé dans l'orifice de décharge (11) pour éviter au gaz d'être déchargé, dans lequel
le cylindre de gaz pyrotechnique (3) comprend en plus :
une bague de guidage (5) ayant une forme cylindrique, et
un poinçon de perforation (6) monté avec la bague de guidage (5) qui fait face au disque de rupture (2) à chasser de la bague de guidage (5) pour briser le disque de rupture (2) lorsqu'une pression intérieure de la chambre de lancement (312) dépasse un seuil prédéterminé, dans laquelle
la chambre de dégagement du gaz (311) est formée avec au moins un évent (313) pour libérer le gaz emmagasiné dans le cylindre de gaz à haute pression (1) et la chambre de lancement (312) est remplie de gaz produisant un milieu pour produire du gaz servant à entraîner le poinçon de perforation (6) lorsque l'ensemble d'allumage (4) est allumé,
**caractérisé en ce que**
la bague de guidage (5) est contenue solidement dans le cylindre de gaz pyrotechnique (3) et est fixement accouplée à une paroi intérieure de la chambre de lancement (312) pour diviser hermétiquement l'espace contenu en une chambre de dégagement du gaz (311) et
la chambre de lancement (312).

2. Générateur de gaz hybride 1 selon la revendication 1 comprenant en plus un écran filtrant (7) pourvu à l'intérieur de la chambre de dégagement de gaz (311) pour couvrir l'évent (313).

3. Générateur de gaz hybride 1 dans lequel l'ensemble d'allumage (4) comprend :
un couvercle d'extrémité (41) hermétiquement raccordé à la chambre de lancement (312) et
un tube d'allumage (42) rempli de poudre d'allumage qui est projetée à l'intérieur de la chambre de lancement (312).

4. Générateur de gaz hybride selon la revendication 3 dans lequel la bague de guidage (5) a un trou cylindrique intérieur et le poinçon de perforation (6) possède une partie tronconique (61) et une partie cylindrique (62) raccordée à la partie tronconique (61) avec la partie tronconique (61) faisant face au disque de rupture (2) et la bague de guidage (5) et le poinçon de perforation correspondant (6) sont fixés dans la chambre de lancement (312) pour former un espace hermétique.

5. Générateur de gaz hybride selon la revendication 1 dans lequel le disque de rupture (2) a une forme de disque convexe avec un côté convexe faisant face à la chambre de dégagement de gaz (311) et le disque de rupture (2) est soudé dans l'orifice de décharge (11).

6. Générateur de gaz hybride selon la revendication 1 dans lequel l'ensemble d'allumage (4) a une résistance de montage avec le cylindre de gaz pyrotechnique (3) supérieure à celle du poinçon de perforation (6) avec la bague de guidage (5).

7. Générateur de gaz hybride selon la revendication 1 dans lequel le cylindre de gaz pyrotechnique (3) est raccordé par filetage à l'orifice de décharge (11).

8. Générateur de gaz hybride selon la revendication 1 dans lequel la résistance du disque de rupture (2) est configurée pour être brisée par le poinçon de perforation (6) et configurée en plus pour éviter la rupture du cylindre de gaz à haute pression (1) après avoir été heurté par le poinçon de perforation (6).

9. Véhicule comprenant le générateur de gaz hybride selon la revendication 1.
